# FASCICULE DE BREVET EUROPEEN

(11) **EP 1 005 240 B1**
(45) Date de publication et mention de la délivrance du brevet: **08.06.2005**
(21) Numéro de dépôt: 99402738.1
(22) Date de dépôt: 04.11.1999
(51) Int. Cl.: H04Q 3/66, H04L 12/56

(54) **Routage d'appel préemptif dans un réseau de télécommunication**
Unterbrechende Anrufweglenkung in einem Fernmeldenetz
Pre-emptive call routing in a telecommunications network

(30) Priorité: 26.11.1998 FR 9814878
(43) Date de publication de la demande: 31.05.2000
(73) Titulaire: ALCATEL, 75008 Paris (FR)
(72) Inventeur: Phan, Cao Thanh, 92500 Rueil Malmaison (FR); Tran, Nhut Quan, 95800 Cergy (FR)
(74) Mandataire: Sciaux, Edmond

(56) Documents cités:
- EP-A- 0 830 047
- US-A- 5 402 478
- PEYRAVIAN M ET AL: "DECENTRALIZED NETWORK CONNECTION PREEMPTION ALGORITHMS" COMPUTER NETWORKS AND ISDN SYSTEMS, vol. 30, no. 11, 22 juin 1998 (1998-06-22), page 1029-1043 XP004123763 ISSN: 0169-7552
- "METHOD FOR EFFICIENTLY PROVIDING DIFFERENT LEVELS OF NETWORK AVAILABILITY IN HIGH-SPEED NETWORKS" IBM TECHNICAL DISCLOSURE BULLETIN, vol. 37, no. 1, 1 janvier 1994 (1994-01-01), pages 509-513, XP000428865 ISSN: 0018-8689

## Description

La présente invention concerne les réseaux de télécommunications, et plus particulièrement le routage des appels dans un réseau de télécommunications, notamment dans un réseau privé, dans lequel les appels présentent de priorités différentes.

Les réseaux privés de télécommunications sont formés de noeuds de communication, reliés entre eux par des arcs ou artères acheminant les communications et/ou la signalisation. J. Eldin et K. P. Lathia, Le RNIS appliqué au Centrex et aux réseaux privés virtuels contient une description des réseaux privés physiques et des réseaux privés virtuels. Comme expliqué dans ce document, dans un réseau privé physique, les différents sites ou noeuds sont reliés par des circuits spécialisés, tandis que dans un réseau privé virtuel, chaque noeud est relié au commutateur local le plus proche, du réseau public, où un logiciel approprié établit les liaisons à la demande. Deux variantes de réseau privé virtuel existent: on peut d'une part prévoir des liaisons semi-permanentes, qui sont établies sans numérotation, dès que l'un des noeuds a besoin du circuit, et qui relient toujours les deux mêmes points. Ce peut être notamment le cas pour des liaisons de signalisation, dans une application sur un réseau numérique à intégration de service. On peut d'autre part prévoir des liaisons commutées, qui ne peuvent être établies que par numérotation. Dans la suite de la description, on considère des réseaux privés physiques ou virtuels, formés de noeuds reliés par des artères, qui peuvent être de tout type: des artères comprenant des liaisons dédiées, ou des artères formées en empruntant un réseau externe; celui-ci peut être de type quelconque - le réseau public commuté, un réseau public mobile terrestre, un réseau numérique à intégration de service, un autre réseau privé, etc.

Dans les réseaux de télécommunications se pose le problème du routage des appels, i. e. du choix d'un acheminement des artères permettant d'acheminer un appel à travers le réseau, le cas échéant avec des débordements vers un réseau externe. Un tel routage des appels a pour but de permettre l'acheminement d'un appel et l'établissement d'une communication, tout en cherchant à répartir la charge des communications à travers le réseau. De façon connue en soi, on procède à des calculs de routage en définissant une fonction de coût pour les artères du réseau. Cette fonction permet d'affecter à chaque artère un coût représentatif du risque de blocage de l'artère; on peut choisir une fonction de coût calculée comme le rapport entre les ressources requises et les ressources disponibles sur l'artère:
coût := ressources requises / ressources disponibles.

Le meilleur routage est dans ce cas celui qui minimise la somme des coûts des artères composant le routage. On procède habituellement à un calcul de routage au moment de l'établissement d'une communication, de sorte à acheminer l'appel.

Par ailleurs, il est connu en soi de prévoir pour les communications dans un réseau privé des priorités différentes. Le choix d'une priorité élevée permet un routage préférentiel d'un appel, au besoin en préemptant les ressources du réseau privé qui sont utilisées par les communications présentant une priorité plus faible.

Il a été proposé de gérer les priorités en définissant pour chaque communication d'une part un niveau de priorité, et d'autre part un mode d'activation. Le niveau de priorité est par exemple un nombre entier; le mode d'activation est choisi dans la liste suivante:
- communication non protégée;
- communication protégée non préemptrice;
- communication protégée préemptrice.

Dans cette solution, une communication protégée ne peut pas subir de préemption de la part d'une autre communication. En d'autres termes, la préemption s'effectue sur les ressources des communications non protégées, ayant le niveau de priorité le plus faible. Il est aussi proposé, en cas de saturation du réseau, d'observer les contraintes suivantes pour le routage d'un appel :
- la priorité maximale de toutes les communications préemptées pour le routage d'une communication doit être la plus faible possible;
- le nombre de communications préemptées doit être le plus faible possible;
- le coût global du routage doit être le plus faible possible.

Le document **EP-A-0 830 047** décrit un procédé de routage d'un appel dans un réseau avec une pluralité de noeuds reliés par des artères, comprenant le calcul du coût de différentes routes pour acheminer l'appel, et le choix d'une route en fonction du coût ; dans lequel le coût d'une route est un vecteur présentant plusieurs composantes.

Le document **PERAVIAN M ET AL : « DECENTRALIZED NETWORK CONNECTION PREEMPTION ALGORITHMS » COMPUTER NETWORKS AND ISDN SYSTEMS, vol. 30 , no. 11, 22 juin 1998 (1998-06-22), page 1029-1043 XP004123763 ISSSN / 0169-7552** décrit un procédé de routage d'un appel dans un réseau avec une pluralité de noeuds reliés par des artères, comprenant le calcul du coût de différentes routes pour acheminer l'appel, et le choix d'une route en fonction du coût ; dans lequel on optimise la bande passante à préempter, la priorité des connexions à préempter, et le nombre des connexions à préempter,

L'invention apporte une solution au problème du routage des appels dans un réseau, qui permet, autant que possible, de satisfaire les différentes contraintes attachées à la priorité.

Par ailleurs, dans les réseaux privés, se pose le problème de la régression des communications. En effet, dans la mesure où les réseaux acheminent des types de communication différents (voix, données, ou autres ), différents protocoles proposent, comme une qualité de service, des communications présentant des débits alloués différents. C'est par exemple le cas des protocoles X25, ou Frame Relay qui autorisent un repli sur des bandes passantes inférieures si la bande passante n'est pas disponible.

Un autre problème nouveau auquel l'invention apporte une solution est celui de la gestion simultanée des débits alloués et des priorités dans le routage des communications. L'invention permet de gérer les priorités en fonction de classes de débit.

Pour cela, l'invention propose un procédé de routage d'un appel dans un réseau avec une pluralité de noeuds reliés par des artères, comprenant le calcul du coût de différentes routes pour acheminer l'appel, et le choix d'une route en fonction du coût ; dans lequel le coût d'une route est un vecteur présentant plusieurs composantes ; caractérisé en ce que chaque appel est affecté d'un niveau de priorité en fonction duquel il est susceptible de préempter des communications dans le réseau ;
en ce que :
- une première composante égale à la valeur maximale sur les artères composant la route du niveau de priorité des communications préemptées sur chacune des dites artères,
- une deuxième composante égale au nombre de communications préemptées sur les dites artères par niveau de priorité,
- et une troisième composante égale à la somme sur les dites artères d'une fonction décroissante de la quantité de ressources disponibles sur chacune des dites artères ;
et en ce que la deuxième composante d'un vecteur de coût donné est inférieure à la deuxième composante d'un autre vecteur de coût, si, pour le niveau de priorité le plus élevé pour lequel les deuxièmes composantes sont différentes, la deuxième composante du vecteur de coût donné est inférieure à la deuxième composante de l'autre vecteur de coût.

Dans ce cas, l'étape de choix s'effectue de sorte à minimiser le coût du routage, pour une relation d'ordre dans laquelle un premier vecteur est inférieur à un second vecteur si la première composante du premier vecteur est inférieure à la première composante du second vecteur ;
et en cas d'égalité des premières composantes, si la deuxième composante du premier vecteur est inférieure à la deuxième composante du deuxième vecteur ;
et en cas d'égalité des premières et deuxièmes composantes, si la troisième composante du premier vecteur est inférieure à la troisième composante du deuxième vecteur. Dans un autre mode de réalisation, le réseau achemine des commu-nications à différents débits, avec une possibilité de régression du débit, et le coût d'une route est aussi fonction du débit susceptible d'être acheminé sur la dite route.

Pour cela, l'invention propose un procédé dans lequel le réseau achemine des communications à différents débits, avec une possibilité de régression du débit, et dans lequel le coût d'une route est aussi fonction du débit susceptible d'être acheminé sur la dite route ; et qui est caractérisé en ce que le coût d'une route comporte une quatrième composante égale à la régression sur la dite route du débit demandé pour un appel.

Dans un mode de réalisation, l'étape de calcul du coût d'une route s'effectue par itérations, en ajoutant successivement les différentes artères composant la route.

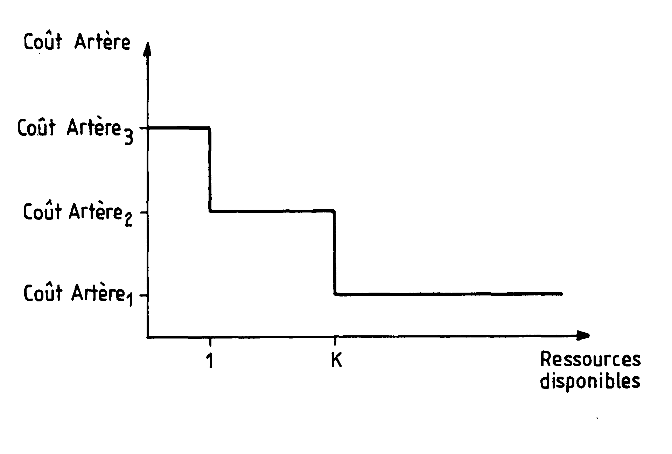

On peut aussi procéder à l'étape de calcul des différentes routes et de calcul d'un route par application de l'algorithme de Dijkstra. D'autres caractéristiques et avantages de l'invention apparaîtront à la lecture de la description qui suit de modes de réalisation de l'invention, donnée à titre d'exemple et en référence aux dessins annexés dont la figure unique montre un graphe de la composante de charge du vecteur de coût selon un mode de réalisation de l'invention;

L'invention propose, dans un réseau de télécommunications, de prendre en compte les paramètres définissant la priorité pour la définition du coût et le calcul des routages. Elle permet au réseau de satisfaire les contraintes de priorité lors de l'acheminement des appels et de l'établissement des communications. Pour cela, l'invention propose de considérer pour les artères du réseau une fonction de coût Cost présentant une forme vectorielle, i. e. présentant deux composantes indépendantes; ce vecteur de coût présente une composante qui est une fonction de la priorité des communications préemptées pour l'acheminement sur le routage, et une composante fonction de la charge de l'artère. Le vecteur de coût peut donc présenter la forme
Cost := (PrioritéMin; CoûtArtère)

La première composante PrioritéMin est la composante représentative du niveau maximal de priorité des communications qui sont préemptées sur l'artère pour acheminer une nouvelle communication. Elle est égale à la priorité maximale des communications à préempter sur l'artère pour assurer la passage d'une nouvelle communication. Si l'artère n'est pas saturée, cette composante est nulle; en revanche, si l'artère est saturée, cette composante est égale au niveau de priorité de la communication préemptable présentant le niveau de priorité le plus bas.

Cette composante permet de tenir compte pour le calcul d'un routage dans le réseau privé, non seulement de la charge des artères, mais aussi des niveaux de priorité des communications déjà établies, et qui doivent le cas échéant être préemptées; elle est représentative de la capacité de l'artère à accepter des communications préemptrices.

La deuxième composante CoûtArtère est fonction de la charge de l'artère ou des ressources disponibles, et est décrite plus en détail dans la suite en référence à la figure.

L'invention propose aussi de considérer pour les routages possibles une fonction de coût Ch présentant une forme vectorielle, i. e. présentant trois composantes indépendantes; ce vecteur de coût présente une composante qui est une fonction de la priorité maximale des communications préemptées sur les différentes artères composant le routage. Il présente aussi une composante représentative du nombre de communications non protégées qui doivent être préemptées pour permettre le routage de l'appel, pour chaque niveau de priorité. La troisième composante est une composante de charge du routage. Le vecteur de coût pour peut donc présenter la forme
Ch := (PrioritéMax; NbComPreempt[priorité], LoadCost)

La première composante PrioritéMax est la composante fonction du niveau de priorité des communications préemptées sur les différentes artères constituant le routage. Elle permet de tenir compte pour le calcul d'un routage dans le réseau privé, non seulement de la charge des artères, mais aussi des niveaux de priorité des communications déjà établies qui sont préemptées pour assurer le routage; le fait de minimiser cette première composante revient préempter les communications les moins prioritaires pour assurer le routage. La deuxième composante est fonction du nombre de communications préemptées, pour chaque niveau de priorité; elle présente donc l'allure d'une table. La troisième composante LoadCost est fonction de la charge de l'artère, et correspond à la composante CoûtArtère des artères traversées.

Le vecteur de coût d'un routage est défini par itération, à partir des vecteurs de coût des différentes artères composant le routage. Pour ajouter une artère présentant un coût Cost à un routage présentant un vecteur de coût Ch, on peut définir une fonction de somme comme suit:
Add(Ch₁, Cost) := Ch₂

Cette fonction de somme permet, à partir du vecteur de coût Ch₁ du routage et du vecteur de coût de l'artère ajoutée, d'obtenir le vecteur de coût Ch₂ du routage incluant l'artère ajoutée. En notant
Ch₂ := (PrioritéMax₂; NbComPreempt₂[priorité], LoadCost₂)
on définit chacune des composantes du vecteur somme comme suit. Pour la première composante, représentative de la priorité maximale des communications préemptées sur les différentes artères, la première composante de la somme est égale à la plus grande des valeurs de priorité des communications préemptées sur le routage précédent, et de la priorité maximale des communications préemptées sur l'artère ajoutée. Autrement dit, lorsque l'on ajoute une artère à un routage donné, la priorité maximale des communications préemptées sur les artères traversées par le nouveau routage n'augmente que si la priorité maximale des communications à préempter sur l'artère ajoutée est supérieure à la priorité maximale des communications préemptées sur les artères traversées par le routage donné. Ceci s'écrit
PrioritéMax₂ := Max[PrioritéMax₁, PrioritéMin]
où la fonction Max associe à un couple de nombre le plus grand des deux nombres.

Pour la deuxième composante, représentative du nombre de communications préemptées, la deuxième composante de la somme est égale à la deuxième composante du routage précédent si l'artère n'est pas saturée, pour chacun des niveaux de priorité. Si l'artère est saturée, l'acheminement de l'appel routé implique de préempter une communication au niveau de priorité PrioritéMin, et le nombre de communications préemptées augmente d'une unité dans ce niveau de priorité.

Ceci s'écrit :
SI CoûtArtère = SATURÉ, ALORS
NbComPreempt₂[PrioritéMin] := NbComPreempt₁ [PrioritéMin] + 1 FINSI
la valeur SATURÉ pour l'artère étant la valeur de la composante CoûtArtère lorsque l'artère n'a plus de ressources disponibles, autrement dit lorsqu'il est nécessaire de préempter une communication pour permettre le routage de l'appel.

La troisième composante LoadCost s'obtient en ajoutant au coût du routage précédent le coût de l'artère. En d'autres termes, la composante de charge d'un routage est égale à la somme des composante de charge de toutes les artères qui composent le routage. Ceci s'écrit
LoadCost₂ := CoûtArtère + LoadCost₁

La fonction de somme ainsi définie permet d'associer à chaque routage à travers le réseau privé un vecteur de coût. L'invention propose aussi une relation d'ordre dans l'espace vectoriel des coûts, de sorte à pouvoir comparer des routages et définir un "meilleur" routage. Celle relation d'ordre est définie de la façon suivante:
Ch₁ < Ch₂
SI PrioritéMax₁ < PrioritéMax₂
OU SI (PrioritéMax₁ = PrioritéMax₂ ET
NbComPreempt₁[priorité] <
NbComPreempt₂[priorité])
OU SI (PrioritéMax₁ = PrioritéMax₂ ET
NbComPreempt₁[priorité] =
NbComPreempt₂[priorité] ET
LoadCost₁ < LoadCost₂)

Dans cette définition apparaît une relation d'ordre et une relation d'égalité entre les composantes NbComPreempt[priorité]; deux tables de nombres de communications préemptées sont égales si leurs valeurs respectives pour chaque niveau de priorité sont égales; si tel n'est pas le cas, on compare les nombres de communications préemptées, en partant du niveau de priorité le plus élevé, et on s'arrête dès qu'il y a une différence; en d'autres termes,
NbComPreempt₁[priorité] < NbComPreempt₂[priorité]
si pour i = Max{ᵢ / NbComPreempt₁[i] NbComPreempt₂[i]}
on a NbComPreempt₁[i] < NbComPreempt₂[i]

Ceci correspond à minimiser le nombre de communications préemptées de haut niveau.

En d'autres termes, un routage est "meilleur" qu'un autre routage s'il n'utilise que des artères avec un niveau de priorité des communications préemptées plus faible. Lorsque deux routages utilisent des artères avec le même niveau maximal de priorité pour les communications préemptées, le "meilleur routage" est celui qui minimise le nombre de communications préemptées à ce niveau. Lorsque deux routages utilisent des artères avec des communications préemptées présentant le même niveau de priorité maximal, et préemptent le même nombre de communications, le meilleur routage est celui qui présente le plus faible coût.

Cette définition d'une relation d'ordre équivaut à un choix de gestion du réseau. Le fait de minimiser la première composante revient à limiter le niveau de priorité des communications préemptées dans le réseau, le cas échéant au détriment du nombre de communications préemptées ou du coût de l'acheminement. Le fait de chercher à minimiser la deuxième composante avant la troisième revient à préférer diminuer le nombre de communications préemptées plutôt que de diminuer le coût de l'acheminement d'un appel. On pourrait définir d'autres relations d'ordre pour satisfaire d'autres contraintes sur le réseau.

Ces définitions d'un coût par routage, et d'une relation d'ordre entre les routages permettent une valuation des différents routages possibles, et une comparaison des différents routages pour en choisir un.

Avantageusement, on utilise l'algorithme de Dijkstra pour déterminer un routage de l'appel qui minimise le vecteur de coût défini plus haut, au sens de la relation d'ordre mentionnée. L'algorithme de Dijkstra est décrit dans les ouvrages d'algorithmique, et est connu pour trouver dans un graphe valué un plus court chemin entre deux noeuds. Dans l'application de cet algorithme à la présente invention, les noeuds du graphe sont formés des noeuds du réseau. Les trajets entre les noeuds sont formés des artères du réseau privé, ou en cas de débordement possible, des débordements par un réseau externe. La distance est le vecteur de coût défini plus haut; la définition de ce vecteur par itération est particulièrement adaptée à l'algorithme de Dijkstra, dans lequel on ajoute à chaque itération des artères à un routage existant. La relation d'ordre classique dans les réels est remplacée dans l'application de l'algorithme par la relation d'ordre définie elle aussi plus haut. On peut aussi utiliser pour le calcul des routages de l'invention des algorithmes analogues à l'algorithme de Dijkstra, qui permettent aussi de trouver un plus court chemin. On peut citer à titre d'exemple l'algorithmé de Bellman ou l'algorithme de Floyd; on notera que l'algorithme de Bellman ne s'applique que pour les graphes sans circuits.

La figure montre une allure possible de la deuxième composante CoûtArtère du vecteur de coût d'une artère, qui est fonction de la charge ou des ressources disponibles; en ordonnées est portée la composante CoûtArtère. En abscisses figurent les ressources disponibles - par exemple pour le cas d'un réseau de type RNIS, dans lequel l'artère est formée d'une pluralité d'accès T0 ou T2, les ressources disponibles correspondent au nombre de canaux B libres. La figure montre essentiellement que la composante CoûtArtère est une fonction croissante de la charge, ou, de façon strictement équivalente, une fonction décroissante des ressources disponibles sur l'artère. Cette fonction présente une valeur constante en deçà d'une valeur donnée de la charge, ou, de façon équivalente, présente une valeur constante au-delà d'une certaine valeur de ressources disponibles.

Dans l'exemple, la charge présente une valeur infinie - i.e. une valeur supérieure à toute autre - si l'artère est coupée. Elle présente une valeur "SATURÉE" si aucun canal n'est disponible; cette valeur "SATURÉE" est choisie de sorte à être supérieure à la somme de tous les coûts possibles d'un routage par des canaux B. Elle présente une première valeur CoûtArtère₃ si un seul canal est disponible, une deuxième valeur CoûtArtère₂ si de 2 à k canaux sont disponibles, k étant un entier, et une valeur CoûtArtère₁ = 1 si plus de k canaux sont disponibles, avec CoûtArtère₃ > CoûtArtère₂ > CoûtArtère₁. Une valeur de k de l'ordre de 10 est appropriée; le choix d'une valeur de k relativement faible permet d'éviter de recalculer les routages, tant que le coût ne varie pas. D'autres valeurs sont possibles, notamment en fonction de la capacité d'une artère et du nombre de canaux occupés par une communication. Le choix des valeurs CoûtArtèreᵢ, du nombre de valeurs CoûtArtèreᵢ, comme le choix des valeurs de charge pour lesquelles la fonction change de valeurs dépend de la nature du réseau, et du répartition de charge qui est souhaitée. Ces valeurs peuvent être des valeurs absolues - comme dans l'exemple - ou elles peuvent être fonction de la capacité totale de l'artère.

On décrit maintenant un deuxième mode de réalisation de l'invention, adapté tout particulièrement à des réseaux utilisant un protocole du type X25, dans lequel la priorité est gérée par classe de débit. L'invention propose dans ce cas de prévoir dans le vecteur de coût des artères ou des routages une composante représentative de la classe du débit, et de la régression imposée dans un routage.

Dans ce mode de réalisation, on associe à chaque artère un coût présentant comme ci-dessus une forme vectorielle, qui peut s'écrire:
Cost := (Préemptlnfo[ClasseDébit]; CoûtArtère)

La deuxième composante est identique à celle du premier mode de réalisation; la première composante est un vecteur fonction de la classe de débit, et qui pour un débit donné indique
- le nombre NbComPreempt[priorité] de communications à préempter, par niveau de priorité, pour obtenir ce débit donné, et
- le niveau de priorité PrioritéMax maximal des communications préemptées sur l'artère.

Dans ce mode de réalisation de l'invention, on associe à chaque routage une composante représentative de la régression en terme de débit qu'implique le routage, par rapport au débit demandé. Le vecteur de coût pour un routage peut s'écrire, pour un débit demandé:
Ch[DébitDemandé] := (DébitRégressé, PrioritéMax;
NbComPreempt[priorité], LoadCost)
dans lequel les trois dernières composantes sont celles définies plus haut. La première composante est la composante représentative de la régression en matière de débit; elle indique pour le routage la régression par rapport au débit demandé.

La fonction de somme définie plus haut est modifiée de la façon suivante. On commence par calculer, pour un routage donné et pour une artère à ajouter, le débit disponible pour l'appel sur l'artère à ajouter. Ce débit dépend de la priorité de l'appel à router, et de la répartition des priorités des appels non protégés sur l'artère en cause, soit de la première composante du vecteur Cost défini à l'instant.

Autrement dit, on cherche quel est le débit que l'artère à ajouter peut acheminer, compte tenu du niveau de priorité de l'appel à router. Si le routage déjà obtenu implique déjà une régression, il n'est pas nécessaire de chercher à dépasser le débit disponible sur ce routage, et on peut se contenter de préempter sur l'artère à ajouter les communications existantes non protégées suffisantes pour assurer le débit régressé obtenu précédemment.

On détermine ainsi, à partir du débit régressé du routage précédent, de la priorité de l'appel à router, et des communications sur l'artère à ajouter:
- le débit disponible sur l'artère;
- le nombre de communications à préempter, par classe de débit;
- la priorité maximale des communications à préempter sur l'artère ajoutée, par classe de débit.

Ces paramètres sont notés DébitRégressé, NbComPreempt[priorité], et PrioritéTransit[classedébit].

Pour la composante de régression, on calcule la régression sur le routage somme comme la plus grande valeur de
- la régression sur le routage précédent; et
- le cas échéant la régression supplémentaire sur l'artère ajoutée, soit en fait :
   DébitRégressé₂ := Max(DébitRégressé₁; DébitDemandé - DébitDisponible)
   si le débit disponible est inférieur au débit demandé, et
   DébitRégressé₂ := DébitRégressé₁, sinon.

De la sorte, la composante de débit régressé du routage somme est égale à la régression qu'implique le routage, en tenant compte de l'artère ajoutée..

Par rapport au mode de réalisation précédent, le calcule des composantes de PrioritéMax et NbComPreempt[priorité] de la somme sont modifiées pour tenir compte du fait qu'il peut être nécessaire de préempter plusieurs communications de niveaux plus faible pour assurer le débit demandé.

On a alors, par classe de débit :
PrioritéMax₂ := Max[PrioritéMax], PrioritéTransit]
pour le niveau de priorité maximal des communications sur les artères composant le routage somme.

Pour le nombre de communications préemptées, on a, par classe de débit
NbComPreempt₂[priorité] := NbComPreempt₁[priorité] + NbComPreempt[priorité]
de sorte à ajouter au nombre de communications préemptées précédent le nombre de communications qu'il est nécessaire de préempter pour arriver à router l'appel à travers l'artère ajoutée.

Dans ce mode de réalisation, la définition du vecteur de coût d'un routage permet de prendre en compte la régression possible.

La relation d'ordre entre deux routages devient, avec les mêmes notations, et pour un débit demandé donné:
Ch₁ < Ch₂ SI DébitRégressé₁ < DébitRégressé₂ SI (DébitRégressé₁ = DébitRégressé₂ ET PrioritéMax₁ < PrioritéMax₂) OU SI (DébitRégressé₁ = DébitRégressé₂ ET PrioritéMax₁ = PrioritéMax₂ ET NbComPreempt₁ [priorité] < NbComPreempt₂[priorité]) OU SI (DébitRégressé₁ = DébitRégressé₂ ET PrioritéMax₁ = PrioritéMax₂ ET NbComPreempt₁ [priorité] = NbComPreempt₂[priorité] ET
LoadCost₁ < LoadCost₂)

En d'autres termes, un routage est "meilleur" qu'un autre routage dès lors qu'il permet l'établissement de la communication avec une régression de débit plus faible. Pour deux routages impliquant une même régression, le meilleur routage est celui qui utilise les artères avec des communications préemptées ayant le niveau de priorité le plus faible. Lorsque deux routages impliquent la même régression, et utilisent des artères avec des communications préemptées de même niveau de priorité, le "meilleur routage" est celui qui minimise le nombre de communications préemptées de haut niveau de priorité. Lorsque deux routages impliquent la même régression, utilisent des artères avec le même niveau de priorité pour les communications préemptées, et préemptent le même nombre de communications, le meilleur routage est celui qui présente le plus faible coût.

Cette définition d'une relation d'ordre équivaut à un choix de gestion du réseau, dans lequel on privilégie avant tout l'acheminement des communications sans régression. Ensuite, le fait de minimiser la deuxième composante revient limiter la priorité des communications préemptées dans le réseau, le cas échéant au détriment du nombre de communications préemptées ou du coût de l'acheminement. Le fait de chercher à minimiser la deuxième composante avant la troisième revient à préférer diminuer le nombre de communications préemptées plutôt que de diminuer le coût de l'acheminement d'un appel. De nouveau, on pourrait définir d'autres relations d'ordre pour satisfaire d'autres contraintes sur le réseau.

Dans ce mode de réalisation comme dans le précédent, on peut procéder au calcul des routages par application de l'algorithme de Dijkstra ou des algorithmes similaires mentionnés plus haut.

Bien entendu, la présente invention n'est pas limitée aux exemples et modes de réalisation décrits et représentés, mais elle est susceptible de nombreuses variantes accessibles à l'homme de l'art. Elle s'applique à d'autres types de réseaux que les réseaux privés mentionnés dans la description. Il est aussi clair que l'invention n'est pas limitée au modes de réalisation décrits. On peut choisir des définitions différentes des composantes du vecteur de coût et de la relation d'ordre, en fonction des contraintes du réseau dans lequel l'invention est appliquée. L'invention s'applique indépendamment de l'existence de communications protégées.

## Revendications

1. Procédé de routage d'un appel dans un réseau avec une pluralité de noeuds reliés par des artères, comprenant le calcul du coût de différentes routes pour acheminer l'appel, et le choix d'une route en fonction du coût ; dans lequel le coût d'une route est un vecteur présentant plusieurs composantes ;
**caractérisé en ce que** chaque appel est affecté d'un niveau de priorité en fonction duquel il est susceptible de préempter des communications dans le réseau ; **en ce que** :
- une première composante égale à la valeur maximale sur les artères composant la route du niveau de priorité des communications préemptées sur chacune des dites artères,
- une deuxième composante égale au nombre de communications préemptées sur les dites artères par niveau de priorité,
- et une troisième composante égale à la somme sur les dites artères d'une fonction décroissante de la quantité de ressources disponibles sur chacune des dites artères ;
et **en ce que** la deuxième composante d'un vecteur de coût donné est inférieure à la deuxième composante d'un autre vecteur de coût, si, pour le niveau de priorité le plus élevé pour lequel les deuxièmes composantes sont différentes, la deuxième composante du vecteur de coût donné est inférieure à la deuxième composante de l'autre vecteur de coût.

2. Procédé selon la revendication 1, **caractérisé en ce que** l'étape de choix s'effectue de sorte à minimiser le coût du routage, pour une relation d'ordre dans laquelle un premier vecteur est inférieur à un second vecteur si la première composante du premier vecteur est inférieure à la première composante du second vecteur ;
et en cas d'égalité des premières composantes, si la deuxième composante du premier vecteur est inférieure à la deuxième composante du deuxième vecteur ;
et en cas d'égalité des premières et deuxièmes composantes, si la troisième composante du premier vecteur est inférieure à la troisième composante du deuxième vecteur.

3. Procédé de routage selon la revendication 1, dans lequel le réseau achemine des communications à différents débits, avec une possibilité de régression du débit, et dans lequel le coût d'une route est aussi fonction du débit susceptible d'être acheminé sur la dite route ; **caractérisé en ce que** le coût d'une route comporte une quatrième composante égale à la régression sur la dite route du débit demandé pour un appel.

4. Procédé selon la revendication 3, **caractérisé en ce que** l'étape de choix s'effectue de sorte à minimiser le coût du routage, pour une relation d'ordre dans laquelle un premier vecteur est inférieur à un second vecteur si la quatrième composante du premier vecteur est inférieure à la quatrième composante du second vecteur, en cas d'égalité des quatrièmes composantes, si la première composante du premier vecteur est inférieure à la première composante du deuxième vecteur, en cas d'égalité des quatrièmes et premières composantes, si la deuxième composante du premier vecteur est inférieure à la deuxième composante du deuxième vecteur, et en cas d'égalité des quatrièmes, premières, et deuxièmes composantes, si la troisième composante du premier vecteur est inférieure à la troisième composante du deuxième vecteur.

5. Procédé selon l'une des revendications 1 à 4, **caractérisé en ce que** l'étape de calcul du coût d'une route s'effectue par itérations, en ajoutant successivement les différentes artères composant la route.

6. Procédé selon l'une des revendications 1 à 5, **caractérisé en ce que** l'étape de calcul des différentes routes et de calcul d'un route s'effectue par application de l'algorithme de Dijkstra.

## Patentansprüche

1. Verfahren zur Rufweglenkung in einem Netz mit mehreren Knotenpunkten, die untereinander über Leitungen verbunden sind, beinhaltend die Berechnung der Kosten unterschiedlicher Leitungswege zum Transportieren des Anrufs und die Auswahl eines Rufweges im Abhängigkeit von den Kosten, in welchem die Kosten für einen Rufweg ein aus mehreren Komponenten bestehender Vektor ist,
**dadurch gekennzeichnet, daß** jedem Anruf eine Prioritätsstufe zugeordnet wird, aufgrund derer er Kommunikationsverbindungen im Netz bevorrechtigen kann, sowie durch
- eine erste Komponente gleich dem maximalen Wert der Prioritätsstufe der auf jeder der besagten Leitungen bevorrechtigten Kommunikationsverbindungen auf den Leitungen, aus welchen sich der Rufweg zusammensetzt,
- eine zweite Komponente gleich der Anzahl bevorrechtigter Kommunikationsverbindungen auf den besagten Leitungen nach Prioritätsstufe,
- und eine dritte Komponente gleich der Summe auf den besagten Leitungen einer abnehmenden Funktion der Menge von verfügbaren Ressourcen auf jeder der besagten Leitungen, ferner dadurch, daß die zweite Komponente eines gegebenen Kostenvektors kleiner als die zweite Komponente eines anderen Kostenvektors ist, wenn für die höchste Prioritätsstufe, für welche die zweiten Komponenten unterschiedlich sind, die zweite Komponente des gegebenen Kostenvektors kleiner als die zweite Komponente des anderen Kostenvektors ist.

2. Verfahren gemäß Anspruch 1, **dadurch gekennzeichnet, daß** der Auswahlschritt so erfolgt, daß die Rufwegkosten für eine Ordnungsrelation minimiert werden, in welcher ein erster Vektor kleiner als ein zweiter Vektor ist, wenn die erste Komponente des ersten Vektors kleiner als die erste Komponente des zweiten Vektors ist,
und für den Fall der Gleichheit der ersten Komponenten, wenn die zweite Komponente des ersten Vektors kleiner als die zweite Komponente des zweiten Vektors ist,
und für den Fall der Gleichheit der ersten und der zweiten Komponente, wenn die dritte Komponente des ersten Vektors kleiner als die dritte Komponente des zweiten Vektors ist.

3. Verfahren zur Rufweglenkung gemäß Anspruch 1, in welchem das Netz Kommunikationsverbindungen unterschiedlicher Datenraten mit einer Möglichkeit zur Verminderung der Datenrate transportiert, und in welchem die Kosten für einen Rufweg zugleich abhängig von der Datenrate sind, die über den besagten Rufweg transportiert werden kann, **dadurch gekennzeichnet, daß** die Kosten eines Rufweges eine vierte Komponente beinhalten, die gleich der Verminderung der für einen Anruf geforderten Datenrate auf der besagten Route ist.

4. Verfahren gemäß Anspruch 3, **dadurch gekennzeichnet, daß** der Auswahlschritt so erfolgt, daß die Rufwegkosten für eine Ordnungsrelation minimiert werden, in welcher ein erster Vektor kleiner als ein zweiter Vektor ist, wenn die vierte Komponente des ersten Vektors kleiner als die vierte Komponente des zweiten Vektors ist, wenn im Fall der Gleichheit der vierten Komponenten die erste Komponente des ersten Vektors kleiner als die erste Komponente des zweiten Vektors ist, wenn im Fall im Fall der Gleichheit der vierten und ersten Komponenten die zweite Komponente des ersten Vektors kleiner als die zweite Komponente des zweiten Vektors ist, und wenn im Fall im Fall der Gleichheit der vierten, ersten und zweiten Komponenten die dritte Komponente des ersten Vektors kleiner als die dritte Komponente des zweiten Vektors ist.

5. Verfahren gemäß einem der Ansprüche 1 bis 4, **dadurch gekennzeichnet, daß** der Schritt zur Berechnung der Kosten eines Rufweges durch Iterationen erfolgt, bei welchen nacheinander die verschiedenen Leitungen, aus denen sich der Rufweg zusammensetzt, hinzugefügt werden.

6. Verfahren gemäß einem der Ansprüche 1 bis 5, **dadurch gekennzeichnet, daß** der Schritt zur Berechnung der verschiedenen Rufwege und zur Berechnung eines Rufweges durch Anwendung des Dijkstra-Algorithmus' erfolgt.

## Claims

1. A method of routing a call in a network with a plurality of nodes connected by trunks comprising the calculation of the cost of various routes for routing the call and choosing one route as a function of the cost, wherein the cost of a route is a vector having a plurality of components;
**characterised in that** each call is assigned a priority level as a function of which it is able to pre-empt calls in the network;
**in that**:
- a first component is equal to the maximum value on the trunks constituting the route of the priority level of calls pre-empted on each of said trunks,
- a second component is equal to the number of calls pre-empted on said trunks per priority level,
- and a third component is equal to the sum on said trunks of a decreasing function of the quantity of resources available on each of said trunks;
and **in that** said second component of a given cost vector is less than said second component of another cost vector if, for the highest priority level for which said second components are different, said second component of said given cost vector is less than said second component of said other cost vector.

2. A method according to claim 1 **characterised in that** said choice minimises the cost of said route for an order relationship in which a first vector is less than a second vector if the first component of said first vector is less than the first component of said second vector,
or, if said first components are equal, if the second component of said first vector is less than the second component of said second vector,
or, if said first and second components are equal, if the third component of said first vector is less than the third component of said second vector.

3. A method of routing according to claim 1, wherein said network routes calls at different throughputs, with the possibility of throughput regression, and wherein the cost of a route is also a function of the throughput that can be conveyed on said route, charaterized in that the cost of a route comprises a fourth component equal to the regression on said route of the throughput requested for a call.

4. A method according to claim 3 **characterised in that** said choice minimises the cost of the route for an order relationship in which a first vector is less than a second vector if the fourth component of said first vector is less than the fourth component of said second vector, or, if said fourth components are equal, if the first component of said first vector is less than the first component of said second vector, or, if the fourth and first components are equal, if the second component of said first vector is less than the second component of said second vector, or, if the fourth, first and second components are equal, if the third component of said first vector is less than the third component of said second vector.

5. A method according to any one of claims 1 to 4, **characterised in that** said route cost is calculated iteratively by adding the various trunks constituting the route successively.

6. A method according to any one of claims 1 to 5 **characterised in that** the Dijkstra algorithm is used to calculate said various routes and to calculate [sic] said one route.
